# FASCICULE DE BREVET EUROPEEN

(11) **EP 2 384 942 B1**
(45) Date de publication et mention de la délivrance du brevet: **21.11.2012**
(21) Numéro de dépôt: 11159108.7
(22) Date de dépôt: 22.03.2011
(51) Int. Cl.: B60T 8/40, B60T 13/57

(54) **Système de freinage hydraulique comportant un régulateur de commande amélioré**
Hydraulisches Bremssystem mit einem verbesserten Steuerglied
Hydraulic braking system comprising an improved control member

(30) Priorité: 07.05.2010 FR 1001978
(43) Date de publication de la demande: 09.11.2011
(73) Titulaire: Robert Bosch GmbH, 70442 Stuttgart (DE)
(72) Inventeur: Angleviel, Hervé, 75011, PARIS (FR); Cagnac, Bastien, 60660, CRAMOISY (FR); Sprocq, Raynald, 77450, ESBLY (FR); Anderson, Chris, 75002, PARIS (FR); Vagner, Laurent, 75019, PARIS (FR)

(56) Documents cités:
- FR-A1- 2 918 332

## Description

L'invention concerne un servomoteur pneumatique d'assistance au freinage pour un véhicule automobile.

L'invention concerne plus particulièrement un système de freinage hydraulique pour un véhicule automobile comportant une organe de commande de frein, notamment une pédale et un servomoteur pneumatique d'assistance au freinage d'au moins un maître-cylindre relié hydrauliquement à au moins un organe de freinage du véhicule,
ledit servomoteur comportant une enveloppe rigide à l'intérieur de laquelle est mobile au moins une cloison transversale délimitant de façon étanche une chambre avant, soumise à une première pression, et une chambre arrière, soumise à une deuxième pression variant entre la première pression et une pression supérieure à la première pression, qui est solidaire d'un piston pneumatique mobile tubulaire qui est monté coulissant et rappelé élastiquement vers l'arrière dans l'enveloppe par l'intermédiaire d'un ressort de rappel, lequel piston pneumatique est susceptible de solliciter une tige d'actionnement du maître-cylindre,
ledit organe de commande étant susceptible de commander un régulateur de pression hydraulique/pneumatique,
un corps du régulateur comportant une première chambre pneumatique, comportant successivement axialement au moins un premier conduit relié à une source de pression supérieure à la première pression, un deuxième conduit relié à la chambre avant et un troisième conduit relié à la chambre arrière qui sont susceptibles d'être mis en communication par une vanne à trois voies logée dans la première chambre, qui comporte :
- un palpeur, mû par l'organe de commande,
- une première douille coaxiale, mobile en coulissement, comportant un premier siège coaxial interposé entre les deuxième et troisième conduits, et une portée susceptible d'obturer le premier conduit,
- une seconde douille coaxiale, interposée radialement entre le palpeur et la première douille, rappelée élastiquement vers le palpeur et le premier siège, dont un deuxième siège, interposé entre les premier et troisième conduits est susceptible de coopérer avec le palpeur pour autoriser ou interrompre la communication entre lesdits premier et troisième conduits, et dont un troisième siège est susceptible de coopérer avec le premier siège pour autoriser ou interrompre la communication entre les deuxième et troisième conduits,
la première douille étant susceptible d'être mue axialement par un moyen de commande pour que sa portée libère le premier conduit,
la première douille étant susceptible, lorsque le palpeur a quitté le deuxième siège, d'être mue axialement par le moyen de commande pour permettre le déplacement du deuxième siège vers le palpeur afin d'interrompre la communication entre les premier et troisième conduits,
le corps du régulateur comportant une seconde chambre hydraulique, comportant successivement axialement au moins un quatrième conduit relié à une chambre du maître-cylindre, et un cinquième conduit relié à un réservoir de liquide hydraulique d'alimentation dudit maître-cylindre, à l'intérieur de laquelle est agencé un piston mobile, qui est agencé entre les quatrième et cinquième conduits, qui est rappelé élastiquement vers le quatrième conduit, qui est solidaire de la première douille pour former le moyen de commande asservi à la pression hydraulique régnant dans chambre du maître-cylindre, et qui est destiné, lorsque la pression de liquide hydraulique régnant dans la chambre du maître-cylindre dépasse un seuil déterminé, à se déplacer avec la première douille pour sélectivement libérer le premier conduit et/ou permettre le déplacement du deuxième siège vers le palpeur afin d'interrompre la communication entre les premier et troisième conduits.

Le document FR-A-2 918 332 divulgue un système de freinage selon le préambule de la revendication 1.

On connaît de nombreux exemples de systèmes de freinage hydrauliques de ce type.

De tels systèmes sont appelés systèmes PCA ou "Pressure Controlled Actuation" et sont notamment destinés à permettre la commande d'un servomoteur d'assistance au freinage d'un maître-cylindre hydraulique de freinage par l'intermédiaire d'un organe de commande de frein découplé, cet organe de frein découplé pouvant par exemple être aussi utilisé pour commander un système de commande freinage électrique associé au système hydraulique.

Dans un tel système hydraulique, on a constaté que, pour de faibles applications d'un effort de freinage, correspondant typiquement à l'établissement d'une pression hydraulique réduite dans le maître-cylindre, le piston mobile ne peut pas déplacer progressivement la première douille afin de provoquer la libération du premier conduit.

Il s'ensuit une admission brutale d'air à la pression supérieure à la première pression dans la chambre pneumatique du régulateur, ce qui a pour effet de transmettre un choc à l'organe de commande de frein.

L'invention remédie à cet inconvénient en proposant un moyen supplémentaire d'admission d'air correspondant à de faibles applications d'un effort de freinage.

Dans ce but, l'invention propose un système de freinage hydraulique du type décrit précédemment, caractérisé en ce que la première chambre pneumatique comporte un sixième conduit relié à la source de pression supérieure à la première pression, communiquant coaxialement avec le deuxième siège, qui est destiné à permettre l'alimentation du troisième conduit sous une pression supérieure à la première pression lorsque la première douille, occupant une position associée à une pression réduite dans la chambre du maître-cylindre obture le premier conduit par l'intermédiaire de sa portée.

Selon d'autres caractéristiques de l'invention :
- le sixième conduit est d'une section restreinte inférieure au premier conduit pour permettre :
   - une alimentation réduite de la chambre arrière à la pression supérieure à la première pression par le seul sixième conduit lorsque la première douille, occupant une position associée à une pression réduite dans la chambre du maître-cylindre obture le premier conduit par l'intermédiaire de sa portée,
   - une alimentation élevée de la chambre arrière à la pression supérieure à la première pression simultanément par les premier et sixième conduits lorsque la première douille, occupant une position associée à une pression élevée dans la chambre du maître-cylindre, libère le premier conduit de sa portée,
- le régulateur de pression comporte un élément tubulaire qui comporte :
   - un premier tronçon, formant la première douille coulissant dans la première chambre pneumatique, comportant successivement axialement la portée périphérique susceptible d'obturer le premier conduit débouchant radialement dans la première chambre, au moins un perçage agencé radialement au moins partiellement en regard du deuxième conduit et destiné à permettre la communication entre le deuxième conduit et l'intérieur du premier tronçon, le premier siège interne, et au moins une lumière destinée à permettre la communication entre l'intérieur du premier tronçon et le troisième conduit,
   - un second tronçon, formant le piston mobile coulissant dans la seconde chambre hydraulique, qui est rappelé élastiquement par un ressort prenant appui sur une paroi de fond de la seconde chambre, et qui comporte au moins une paroi interposée entre les quatrième et cinquième conduits,
- l'élément tubulaire reçoit en coulissement interne une tige d'actionnement coaxiale au palpeur, rappelée élastiquement vers le piston mobile, qui est destinée à permettre la sollicitation du piston mobile directement par le palpeur pour établir une pression dans le maître-cylindre en cas de défaillance du servomoteur,
- le premier tronçon comporte deux lumières opposées oblongues qui reçoivent en coulissement deux bras radiaux opposés qui sont solidaires d'une première extrémité de la tige d'actionnement et qui reçoivent en appui une extrémité d'un ressort de rappel dont l'autre extrémité prend appui sur une face transversale d'épaulement de la première chambre,
- une seconde extrémité de la tige est guidée dans un alésage du piston mobile.
- le piston mobile est tubulaire, d'un diamètre correspondant sensiblement au diamètre de la seconde chambre hydraulique et en ce que son alésage, qui comporte la paroi interposée entre les quatrième et cinquième conduits, communique avec le quatrième conduit par l'intermédiaire d'un perçage radial, ladite paroi étant susceptible d'être sollicitée directement par la tige d'actionnement en cas de défaillance du servomoteur,
- le palpeur est fixé à une première extrémité d'une tige de commande qui est montée mobile avec jeu au travers d'un perçage de la seconde douille et dont une seconde extrémité est susceptible d'être mue par l'organe de commande,
   le sixième conduit débouche dans une partie de la première chambre située en amont des première et deuxième douilles, la partie de la première chambre communiquant avec le perçage de la deuxième douille pour permettre l'alimentation du troisième conduit sous une pression supérieure à la première pression au travers de la deuxième douille,
- la seconde extrémité de la tige de commande est solidaire d'un piston hydraulique qui est monté coulissant de manière étanche dans une partie de la première chambre, opposée à la seconde chambre, qui communique hydrauliquement avec l'organe de commande.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un système de freinage hydraulique selon l'invention,
- la figure 2 est une vue en coupe d'un régulateur de pression du système selon l'invention représenté dans une première configuration de repos, les deuxième et troisième conduits communiquant ;
- la figure 3 est une vue en coupe d'un régulateur de pression du système selon l'invention représenté dans une deuxième configuration de début d'application, les deuxième et troisième conduits étant isolés ;
- la figure 4 est une vue en coupe d'un régulateur de pression du système selon l'invention représenté dans une troisième configuration d'application réduite, les sixième et troisième conduits communiquant ;
- la figure 5 est une vue en coupe d'un régulateur de pression du système selon l'invention représenté dans une quatrième configuration de rééquilibrage ;
- la figure 6 est une vue en coupe d'un régulateur de pression du système selon l'invention représenté dans une cinquième configuration d'application élevée, les premier, sixième et troisième conduits communiquant ;
- la figure 7 est une vue en coupe d'un régulateur de pression du système selon l'invention représenté dans une sixième configuration de défaillance ;

Dans la description qui va suivre, des chiffres de référence identiques désignent des pièces identiques ou ayant des fonctions similaires.

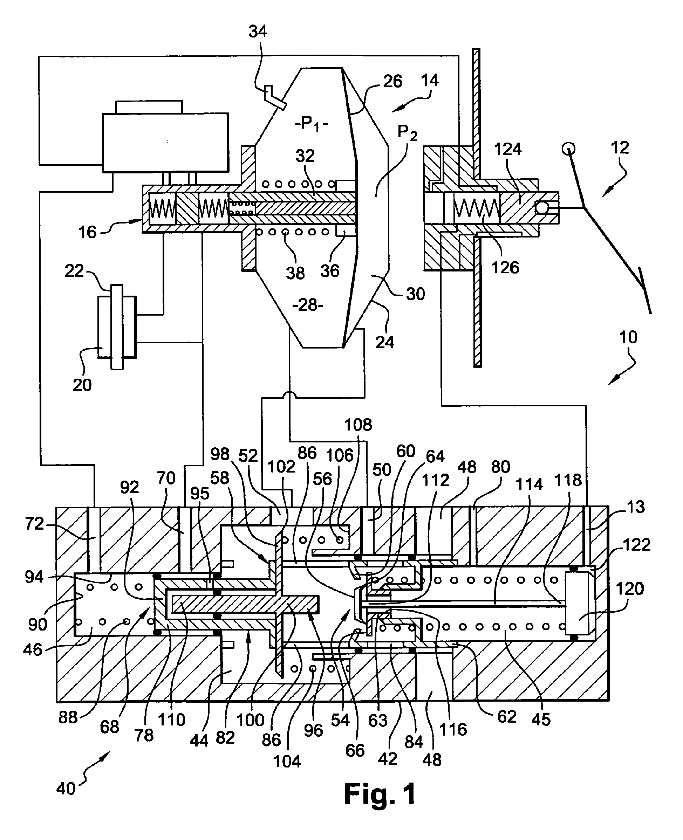

Par convention, les termes "avant", "arrière", supérieur", "inférieur" désignent respectivement des éléments ou des positions orientés respectivement vers la gauche, la droite, le haut, ou le bas des figures 1 à 6.

On a représenté à la figure 1 l'ensemble d'un système 10 de freinage hydraulique pour un véhicule automobile.

De manière connue, le système 10 comporte un organe 12 de commande de frein, notamment une pédale, et un servomoteur 14 pneumatique d'assistance au freinage d'au moins un maître 16 cylindre relié hydrauliquement à au moins un organe 20 de freinage du véhicule, tel qu'un étrier 20 destiné à pincer un disque de frein 22 solidaire d'une roue (non représentée) du véhicule.

De manière connue, le servomoteur 14 comporte une enveloppe 24 rigide à l'intérieur de laquelle est mobile au moins une cloison 26 transversale délimitant de façon étanche une chambre avant 28, soumise à une première pression "P₁", et une chambre arrière 30, soumise à une deuxième pression "P₂" variant entre la première pression "P₁" et une pression "Pₐ" supérieure à la première pression "P₁"

La variation de la pression "P₂" est susceptible de provoquer les déplacements de la cloison 26, qui est susceptible de solliciter, comme on le verra ultérieurement, une tige 32 d'actionnement du maître-cylindre 16.

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vide du véhicule. La pression "Pₐ" supérieure à la première pression "P₁" correspond par exemple à la pression atmosphérique.

La chambre avant 28 est reliée à la source de dépression du véhicule par l'intermédiaire d'un conduit 34 de dépression qui débouche dans l'enveloppe 24.

La cloison mobile 26 est solidaire d'un piston 36 pneumatique mobile tubulaire qui est monté coulissant et rappelé élastiquement vers l'arrière dans l'enveloppe 24 par l'intermédiaire d'un ressort 38 de rappel, ledit piston 36 pneumatique étant susceptible de solliciter la tige 32 d'actionnement du maître-cylindre 16.

L'organe 12 de commande est susceptible de commander un régulateur 40 de pression hydraulique/pneumatique qui est susceptible de distribuer l'air entre les chambres avant 28 et arrière 30 du servomoteur 14.

Le détail des moyens permettant la liaison de l'organe 12 de commande au régulateur 40 seront explicités plus en détail dans la suite de la présente description.

De manière connue, un corps 42 du régulateur 40 comporte une première chambre pneumatique 44 et une seconde chambre hydraulique 46.

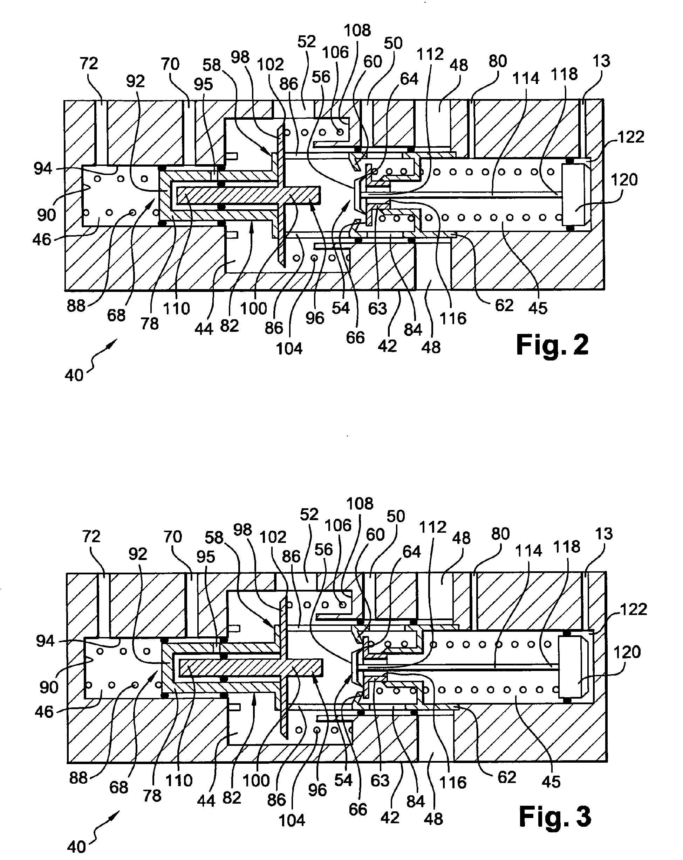

La première chambre pneumatique 44 comporte successivement axialement, de la droite vers la gauche des figures 2 à 7, au moins un premier conduit 48 relié à la source de pression "Pₐ" supérieure à la première pression "P₁", un deuxième conduit 50 relié à la chambre avant 28 et un troisième conduit 52 relié à la chambre arrière 30. Ces conduits 48, 50, et 52 sont susceptibles d'être mis sélectivement en communication par l'intermédiaire d'une vanne 54 à trois voies logée dans la première chambre 44.

Cette vanne 54 à trois voies comporte :
- un palpeur 56, mû par l'organe 12 de commande,
- une première douille coaxiale 58, mobile en coulissement, comportant un premier siège coaxial 60 interposé entre le deuxième conduit 50 et le troisième conduit 52, et une portée 62 susceptible d'obturer le premier conduit 48,
- une seconde douille coaxiale 63, interposée radialement entre le palpeur 56 et la première douille 58, rappelée élastiquement vers le palpeur 56 et le premier siège 60, dont un deuxième siège 64, interposé entre les premier conduit 48 et troisième conduit 52 est susceptible de coopérer avec le palpeur 56 pour autoriser ou interrompre la communication entre lesdits premier et troisième conduits 48, 52, et dont un troisième siège 66 est susceptible de coopérer avec le premier siège 60 pour autoriser ou interrompre la communication entre les deuxième et troisième conduits 50, 52.

Dans cette configuration, la première douille 58 est susceptible d'être mue axialement par un moyen 68 de commande pour que sa portée 62 libère le premier conduit 48. Ce moyen 68 de commande sera explicité ultérieurement dans la suite de la présente description.

La première douille 58 est aussi susceptible, lorsque le palpeur 56 a quitté le deuxième siège 64, d'être mue axialement par le moyen 68 de commande pour permettre le déplacement du deuxième siège 64 vers le palpeur 56 afin d'interrompre la communication entre les premier et troisième conduits 48, 52.

A cet effet, pour former le moyen de commande 68, la seconde chambre hydraulique 46 du corps 42 du régulateur 40, comporte successivement axialement de la droite vers la gauche au moins un quatrième conduit 70 relié à une chambre 72 du maître-cylindre 16, et un cinquième conduit 74 relié à un réservoir 76 de liquide hydraulique d'alimentation dudit maître-cylindre 14.

Un piston mobile 78 est agencé dans la seconde chambre hydraulique 46 entre les quatrième et cinquième conduits 70, 74.

Ce piston 78 est rappelé élastiquement vers le quatrième conduit 70 et est donc soumis à la différence de pression entre les quatrième et cinquième conduits 70, 74.

Le piston 78 est solidaire de la première douille 58 pour former le moyen de commande 68 asservi à la pression hydraulique régnant dans la chambre 72 du maître-cylindre 16.

Ainsi, lorsque la pression de liquide hydraulique régnant dans la chambre 72 du maître-cylindre 16 dépasse un seuil déterminé, le piston 78 se déplace avec la première douille 58 pour sélectivement libérer le premier conduit 48 et/ou permettre le déplacement du deuxième siège 64 vers le palpeur 56 afin d'interrompre la communication entre les premier et troisième conduits 48, 52.

Dans un tel système hydraulique, on a constaté que, pour de faibles applications d'un effort de freinage, correspondant typiquement à l'établissement d'une pression hydraulique réduite dans le maître-cylindre, le piston mobile 78 ne peut pas déplacer progressivement la première douille afin de provoquer la libération du premier conduit 48.

Lorsque le premier conduit 48 est enfin libéré, il s'ensuit une admission brutale d'air à la pression supérieure à la première pression dans la chambre pneumatique du régulateur, ce qui a pour effet de décaler brutalement le palpeur 56 et donc de transmettre un choc à l'organe de commande de frein.

L'invention remédie à cet inconvénient en proposant un moyen supplémentaire d'admission d'air correspondant à de faibles applications d'un effort de freinage.

Dans ce but, l'invention propose un système 10 de freinage hydraulique du type décrit précédemment, caractérisé en ce que la première chambre pneumatique 44 comporte un sixième conduit 80 relié à la source de pression "Pₐ" supérieure à la première pression "P₁", communiquant coaxialement avec le deuxième siège 64, qui est destiné à permettre l'alimentation du troisième conduit 52 sous une pression "Pₐ" supérieure à la première pression "P₁" lorsque la première douille 58, occupant une position associée à une pression réduite dans la chambre 72 du maître-cylindre 16 obture le premier conduit 48 par l'intermédiaire de sa portée 62.

Avantageusement, le sixième conduit 80 est d'une section restreinte inférieure au premier conduit 48.

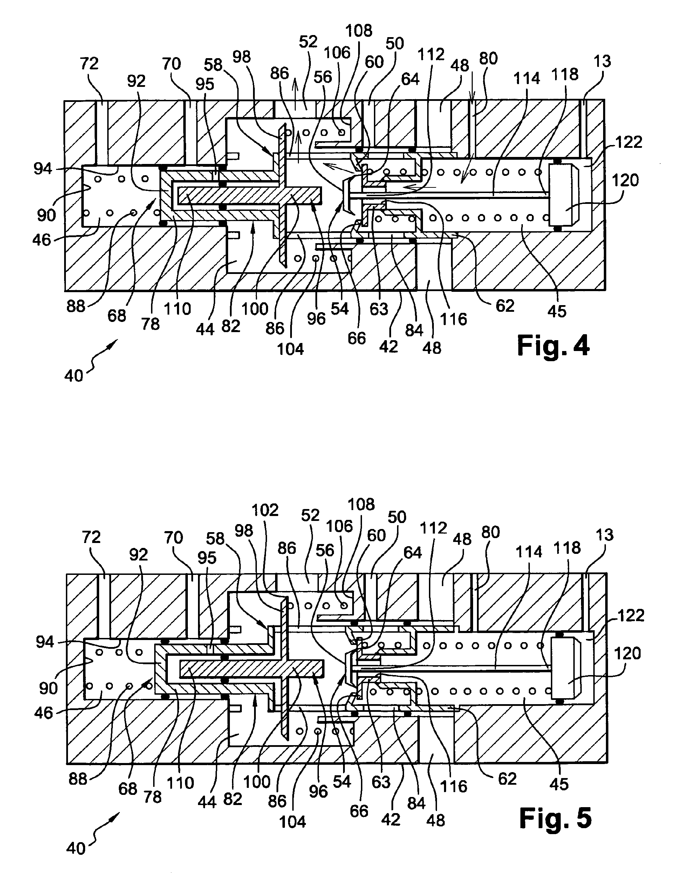

Cette configuration permet, comme représenté à la figure 4, une alimentation réduite de la chambre arrière 30 à la pression "Pₐ" supérieure à la première pression "P₁" par le seul sixième conduit 80 lorsque la première douille 58, occupant une position associée à une pression réduite dans la chambre 72 du maître-cylindre 16 obture le premier conduit 48 par l'intermédiaire de sa portée 62.

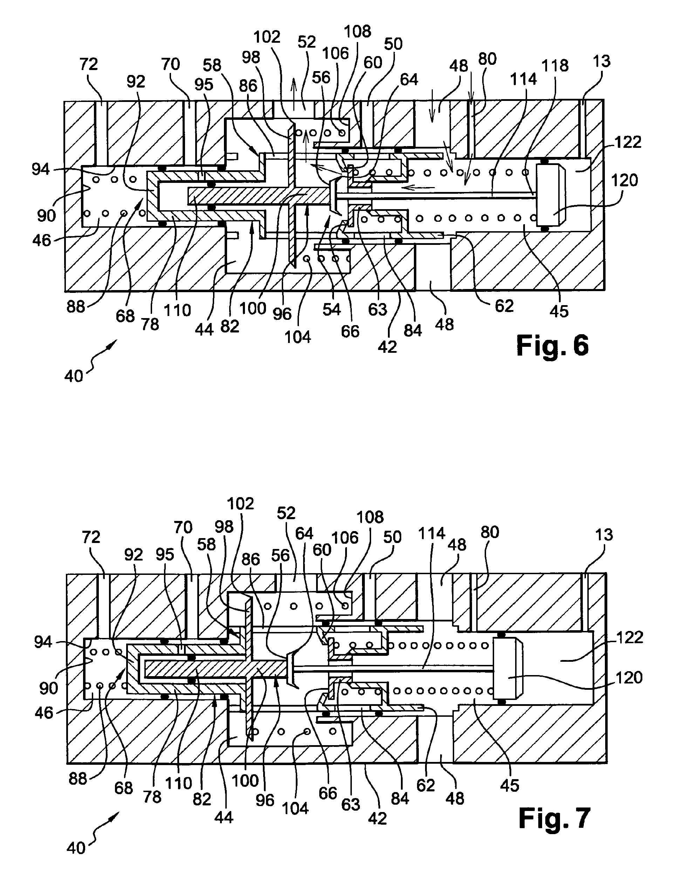

Cette configuration permet aussi, comme représenté à la figure 6, une alimentation élevée de la chambre arrière 30 à la pression "Pₐ" supérieure à la première pression "P₁" simultanément par les premier et sixième conduits 48, 80 lorsque la première douille 58, occupant une position associée à une pression élevée dans la chambre 72 du maître-cylindre 16, libère le premier conduit 48 de sa portée 62.

Par ailleurs, le régulateur 40 de pression comporte avantageusement un élément 82 tubulaire qui comporte la première douille 58 et le piston mobile 78.

A cet effet, l'élément 82 comporte un premier tronçon, formant la première douille 58 coulissant dans la première chambre pneumatique. Ce tronçon comporte successivement et axialement, de la droite vers la gauche des figures 2 à 7, la portée périphérique 62 susceptible d'obturer le premier conduit 48 débouchant radialement dans la première chambre 44, au moins un perçage 84 agencé radialement au moins partiellement en regard du deuxième conduit 50 et destiné à permettre la communication entre le deuxième conduit 50 et l'intérieur du premier tronçon, le premier siège interne 60, et au moins une lumière 86 destinée à permettre la communication entre l'intérieur du premier tronçon et le troisième conduit 52.

L'élément 82 comporte par ailleurs un second tronçon, formant le piston mobile 78 coulissant dans la seconde chambre hydraulique, qui est rappelé élastiquement par un ressort 88 prenant appui sur une paroi 90 de fond de la seconde chambre 46, et qui comporte au moins une paroi 92 transversale interposée entre les quatrième et cinquième conduits 70, 74. C'est cette paroi 92 qui est soumise à la différence de pression entre les quatrième et cinquième conduits 70, 74.

Plus particulièrement le piston mobile 78 est tubulaire, d'un diamètre correspondant sensiblement au diamètre de la seconde chambre hydraulique 46 et son alésage 94, qui comporte la paroi 92 interposée entre les quatrième et cinquième conduits 70, 74, communique avec le quatrième conduit 70 par l'intermédiaire d'un perçage radial 95.

En effet, le piston mobile 78 est réalisé de manière tubulaire pour permettre sa sollicitation directement par le palpeur 56 en cas de défaillance du servomoteur 16.

Plus particulièrement, l'élément tubulaire 82 reçoit en coulissement interne une tige 96 d'actionnement, coaxiale au palpeur 56, rappelée élastiquement vers le piston mobile 78, qui est destinée à permettre la sollicitation du piston mobile 78 directement par le palpeur 56 pour établir une pression dans le maître-cylindre en cas de défaillance du servomoteur 16.

Pour permettre le guidage de cette tige d'actionnement 96, le premier tronçon comporte deux lumières opposées 86 oblongues qui reçoivent en coulissement deux bras radiaux opposés 98 qui sont solidaires d'une première extrémité 100 de la tige 96 d'actionnement. Ces bras 98 reçoivent en appui une extrémité 102 d'un ressort de rappel 104 dont l'autre extrémité 106 prend appui sur une face transversale d'épaulement 108 de la première chambre 44.

Une seconde extrémité 110 de la tige 96 d'actionnement est montée guidée dans un alésage du piston mobile 78, et les bras 98 sont destinés à solliciter directement le piston 78 en cas de défaillance du servomoteur 14.

Par ailleurs, le palpeur 56 est fixé à une première extrémité 112 d'une tige 114 de commande qui est montée mobile avec jeu au travers d'un perçage 116 de la seconde douille 63 et dont une seconde extrémité 118 est susceptible d'être mue par l'organe 12 de commande.

On comprendra que de préférence, le sixième conduit 80 débouche dans une partie 45 de la première chambre 44 située en amont des première et deuxième douilles 58, 63, la partie 45 de la première chambre 44 communiquant avec le perçage 116 de la deuxième douille 63 pour permettre l'alimentation du troisième conduit 52 sous la pression "Pₐ" supérieure à la première pression "P₁" au travers de la deuxième douille 63.

Dans le mode de réalisation préféré de l'invention, l'organe 12 de commande de frein est lié au régulateur 40, et notamment au palpeur 56 par l'intermédiaire d'un conduit hydraulique 13. Cette configuration n'est pas limitative de l'invention, et l'organe 12 de commande pourrait être lié mécaniquement au palpeur 56.

Cette configuration est néanmoins préférée pour permettre également la commande d'un système de freinage électrique par le même organe 12 de commande de frein.

A cet effet, la seconde extrémité 118 de la tige 114 de commande est solidaire d'un piston hydraulique 120 qui est monté coulissant de manière étanche dans une partie 122 de la première chambre 44, opposée à la seconde chambre 46, qui communique hydrauliquement avec l'organe 12 de commande.

L'organe 12 de commande comporte à cet effet un piston 124, monté mobile et rappelé élastiquement dans une chambre hydraulique externe 126, qui est solidaire de la pédale de frein. Ainsi l'actionnement de la pédale de frein provoque l'actionnement du piston 120, de la tige 114 et du palpeur 56.

Dans cette configuration, le régulateur 40 est susceptible d'occuper les configurations des figures 2 à 7.

Dans une première configuration de repos qui a été représentée à la figure 2, l'organe 12 de commande n'est pas sollicité et le palpeur 56 retient la seconde douille 63, de sorte que les deuxième et troisième conduits 50, 52 communiquent.

Puis, dans une deuxième configuration de début d'application représentée à la figure 3, l'organe 12 de commande est sollicité et provoque le déplacement du palpeur 56. Le palpeur est accompagné par la douille 63 dont troisième siège 66 rentre en contact avec le premier siège 60, isolant alors les deuxième et troisième conduits 50, 52 étant isolés.

Au-delà de cette position, comme représenté à la figure 4, une application réduite sur l'organe de commande 12 provoque le décollement du palpeur 56 du deuxième siège 64 de la douille 63. L'air pénètre dans la chambre pneumatique 44 par le sixième conduit et circule dans le troisième conduit 52, ce qui actionne le servomoteur.

L'actionnement du servomoteur établit une pression dans la chambre 72 du maître cylindre 16 qui communique avec la chambre hydraulique 46. Cette pression tend à déplacer le piston mobile 78, qui déplace la première douille 58 et avec elle la seconde douille 63, dont le siège 64 entre à nouveau en contact avec le palpeur 56 et isole les sixième et troisième conduits 80, 52 selon une quatrième configuration de rééquilibrage, comme représenté à la figure 6. L'application de l'effort se fait donc à pression régulée.

Il est nécessaire d'effectuer une nouvelle application (non représentée) sur l'organe 12 de commande pour provoquer le décollement du palpeur 56 du deuxième siège 64 de la douille 63, décollement aussitôt à nouveau régulé.

Dans une cinquième configuration d'application élevée représentée à la figure 6, on remarquera que le mouvement du piston 78 et de la douille 78 permet à la portée 62 de libérer le premier conduit 48, provoquant ainsi une arrivée d'air maximale, l'air pénétrant dans la chambre pneumatique 44 par les premier et sixième conduits 48, 80.

Enfin, dans une sixième configuration de défaillance représentée à la figure 7, le palpeur 56 peut solliciter directement le piston 78 par l'intermédiaire de la tige d'actionnement 96 pour provoquer directement la sollicitation du maître cylindre 16.

L'invention permet donc de bénéficier d'un système de freinage hydraulique régulé exempt de sauts de pression lors de l'application d'un effort de freinage.

### NOMENCLATURE

- 10: système de freinage
- 12: organe de commande de frein
- 13.: conduit hydraulique
- 14: servomoteur
- 16: maître cylindre
- 20: organe de freinage - étrier
- 22: disque de frein
- 24: enveloppe du servomoteur
- 26: cloison interne du servomoteur
- 28: chambre avant du servomoteur
- 30: chambre arrière du servomoteur
- 32: tige d'actionnement du maître cylindre
- 34: conduit de dépression
- 36: piston pneumatique
- 38: ressort de rappel
- 40: régulateur hydraulique/pneumatique
- 42: corps du régulateur
- 44: première chambre pneumatique
- 45: partie de première chambre pneumatique
- 46.: seconde chambre hydraulique
- 48: premier conduit
- 50: deuxième conduit
- 52: troisième conduit
- 54: vanne à trois voies
- 56: palpeur
- 58: première douille coaxiale
- 60: premier siège coaxial
- 62: portée
- 63: seconde douille coaxiale
- 64: deuxième siège
- 66: troisième siège
- 68: moyen de commande
- 70: quatrième conduit
- 72: chambre hydraulique du maître cylindre
- 74: cinquième conduit
- 76: réservoir du maître cylindre
- 78: piston mobile
- 80: sixième conduit
- 82: élément tubulaire
- 84: perçage
- 86: lumière
- 88: ressort
- 90: paroi de fond de la seconde chambre
- 92: paroi transversale du piston mobile
- 94: alésage du piston mobile
- 95: perçage radial du piston mobile
- 96.: tige d'actionnement
- 98: bras radiaux opposés de la tige d'actionnement
- 100: première extrémité de la tige d'actionnement
- 102: extrémité du ressort de rappel
- 104: ressort de rappel
- 106: autre extrémité d ressort de rappel
- 108: face transversale d'épaulement
- 110: seconde extrémité de la tige d'actionnement
- 112: première extrémité de la tige de commande
- 114: tige de commande
- 116: perçage de la seconde douille
- 118: seconde extrémité de la seconde douille
- 120: piston hydraulique
- 122: partie de la première chambre
- 124: piston
- 126: chambre hydraulique externe

## Revendications

1. Système (10) de freinage hydraulique pour un véhicule automobile comportant un organe (12) de commande de frein, notamment une pédale et un servomoteur (14) pneumatique d'assistance au freinage d'au moins un maître-cylindre (16) relié hydrauliquement à au moins un organe (20) de freinage du véhicule,
ledit servomoteur comportant une enveloppe (24) rigide à l'intérieur de laquelle est mobile au moins une cloison (26) transversale délimitant de façon étanche une chambre avant (28), soumise à une première pression (P₁), et une chambre arrière (30), soumise à une deuxième pression (P₂) variant entre la première pression (P₁) et une pression (Pₐ) supérieure à la première pression (P₁), qui est solidaire d'un piston (36) pneumatique mobile tubulaire qui est monté coulissant et rappelé élastiquement vers l'arrière dans l'enveloppe (24) par l'intermédiaire d'un ressort (38) de rappel, lequel piston (36) pneumatique est susceptible de solliciter une tige (32) d'actionnement du maître-cylindre (14),
ledit organe de commande (12) étant susceptible de commander un régulateur (40) de pression hydraulique/pneumatique,
un corps (42) du régulateur (40) comportant une première chambre pneumatique (44), comportant successivement axialement au moins un premier conduit (48) relié à une source de pression (Pₐ) supérieure à la première pression (P₁), un deuxième conduit (50) relié à la chambre avant (28) et un troisième conduit (52) relié à la chambre arrière (30) qui sont susceptibles d'être mis en communication par une vanne (54) à trois voies logée dans la première chambre (44), qui comporte :
- un palpeur (56), mû par l'organe (12) de commande,
- une première douille coaxiale (58), mobile en coulissement, comportant un premier siège (60) coaxial interposé entre les deuxième et troisième conduits (50, 52), et une portée (62) susceptible d'obturer le premier conduit (48),
- une seconde douille coaxiale (63), interposée radialement entre le palpeur (56) et la première douille (58), rappelée élastiquement vers le palpeur (56) et le premier siège (60), dont un deuxième siège (64), interposé entre les premier (48) et troisième (52) conduits est susceptible de coopérer avec le palpeur (56) pour autoriser ou interrompre la communication entre lesdits premier et troisième conduits (48, 52), et dont un troisième siège (66) est susceptible de coopérer avec le premier siège (60) pour autoriser ou interrompre la communication entre les deuxième et troisième conduits (50, 52),
la première douille (58) étant susceptible d'être mue axialement par un moyen (68) de commande pour que sa portée libère (62) le premier conduit,
la première douille (58) étant susceptible, lorsque le palpeur (56) a quitté le deuxième siège (60), d'être mue axialement par le moyen de commande (68) pour permettre le déplacement du deuxième siège (64) vers le palpeur (56) afin d'interrompre la communication entre les premier et troisième conduits (48, 52),
le corps (42) du régulateur (40) comportant une seconde chambre hydraulique (46), comportant successivement axialement au moins un quatrième (70) conduit relié à une chambre (72) du maître-cylindre (14), et un cinquième conduit (74) relié à un réservoir (76)de liquide hydraulique d'alimentation dudit maître-cylindre (14), à l'intérieur de laquelle est agencé un piston mobile (78), qui est agencé entre les quatrième et cinquième conduits (70, 74), qui est rappelé élastiquement vers le quatrième conduit (70, qui est solidaire de la première douille (58) pour former le moyen de commande (68) asservi à la pression hydraulique régnant dans chambre (72) du maître-cylindre (14), et qui est destiné, lorsque la pression de liquide hydraulique régnant dans la chambre (72) du maître-cylindre (14) dépasse un seuil déterminé, à se déplacer avec la première douille (58) pour sélectivement libérer le premier conduit (48) et/ou permettre le déplacement du deuxième siège (64) vers le palpeur (56) afin d'interrompre la communication entre les premier et troisième conduits (48, 52),
**caractérisé en ce que** la première chambre pneumatique (44) comporte un sixième conduit (80) relié à la source de pression supérieure à la première pression, communiquant coaxialement avec le deuxième siège (64), qui est destiné à permettre l'alimentation du troisième conduit (52) sous une pression supérieure à la première pression lorsque la première douille (58), occupant une position associée à une pression réduite dans la chambre (72) du maître-cylindre (14) obture le premier conduit (48) par l'intermédiaire de sa portée (62).

2. Système (10) de freinage hydraulique selon la revendication précédente, **caractérisé en ce que** le sixième conduit (80) est d'une section restreinte inférieure au premier conduit (48) pour permettre :
- une alimentation réduite de la chambre arrière (30) à la pression (Pₐ) supérieure à la première pression (P₁) par le seul sixième conduit (80) lorsque la première douille (58), occupant une position associée à une pression réduite dans la chambre (72) du maître-cylindre (16) obture le premier conduit (48) par l'intermédiaire de sa portée (62),
- une alimentation élevée de la chambre arrière (30) à la pression (Pₐ) supérieure à la première pression (P₁) simultanément par les premier et sixième conduits (48, 80) lorsque la première douille (58), occupant une position associée à une pression élevée dans la chambre (72) du maître-cylindre (16), libère le premier conduit (48) de sa portée (62).

3. Système (10) de freinage hydraulique selon l'une des revendications précédentes, **caractérisé en ce que** le régulateur de pression comporte un élément tubulaire (82) qui comporte :
- un premier tronçon, formant la première douille (58) coulissant dans la première chambre pneumatique (44), comportant successivement axialement la portée périphérique (62) susceptible d'obturer le premier conduit (48) débouchant radialement dans la première chambre (44), au moins un perçage (84) agencé radialement au moins partiellement en regard du deuxième conduit (50) et destiné à permettre la communication entre le deuxième conduit (50) et l'intérieur du premier tronçon, le premier siège interne (60), et au moins une lumière (86) destinée à permettre la communication entre l'intérieur du premier tronçon et le troisième conduit (52),
- un second tronçon, formant le piston mobile (78) coulissant dans la seconde chambre hydraulique (46), qui est rappelé élastiquement par un ressort (88) prenant appui sur une paroi (90) de fond de la seconde chambre, et qui comporte au moins une paroi transversale (92) interposée entre les quatrième et cinquième conduits (70, 74).

4. Système (10) de freinage hydraulique selon la revendication précédente, **caractérisé en ce que** l'élément tubulaire (82) reçoit en coulissement interne une tige d'actionnement (96) coaxiale au palpeur (56), rappelée élastiquement vers le piston mobile (78), qui est destinée à permettre la sollicitation du piston mobile (78) directement par le palpeur (56) pour établir une pression dans le maître-cylindre (14) en cas de défaillance du servomoteur (16).

5. Système (10) de freinage hydraulique selon la revendication précédente, **caractérisé en ce que** le premier tronçon comporte deux lumières (86) opposées oblongues qui reçoivent en coulissement deux bras radiaux (98) opposés qui sont solidaires d'une première extrémité (100) de la tige d'actionnement (96) et qui reçoivent en appui une extrémité (102) d'un ressort de rappel (104) dont l'autre extrémité (106) prend appui sur une face transversale d'épaulement (108) de la première chambre (44).

6. Système (10) de freinage hydraulique selon la revendication précédente, **caractérisé en ce qu'**une seconde extrémité (110) de la tige (96) est guidée dans un alésage du piston mobile (78).

7. Système (10) de freinage hydraulique selon la revendication précédente **caractérisé en ce que** le piston mobile (78) est tubulaire, d'un diamètre correspondant sensiblement au diamètre de la seconde chambre hydraulique (46) et **en ce que** son alésage (94), qui comporte la paroi (92) interposée entre les quatrième et cinquième conduits (70, 74), communique avec le quatrième conduit (70) par l'intermédiaire d'un perçage radial (95), ladite paroi (92) étant susceptible d'être sollicitée directement par la tige (96) d'actionnement en cas de défaillance du servomoteur (16).

8. Système (10) de freinage hydraulique selon l'une des revendications précédentes, **caractérisé en ce que** le palpeur (56) est fixé à une première extrémité (112) d'une tige (114) de commande qui est montée mobile avec jeu au travers d'un perçage (116) de la seconde douille (63) et dont une seconde extrémité (118) est susceptible d'être mue par l'organe (12) de commande.

9. Système (10) de freinage hydraulique selon la revendication précédente, **caractérisé en ce que** le sixième conduit (80) débouche dans une partie (45) de la première chambre (44) en amont des première et deuxième douilles (58, 63), la partie (45) de la première chambre (44) communiquant avec le perçage (116) de la deuxième douille (63) pour permettre l'alimentation du troisième conduit (52) sous une pression (Pₐ) supérieure à la première pression (P₁) au travers de la deuxième douille (63).

10. Système (10) de freinage hydraulique selon l'une des revendications 8 ou 9 **caractérisé en ce que** la seconde extrémité (118) de la tige (114) de commande est solidaire d'un piston hydraulique (120) qui est monté coulissant de manière étanche dans une partie (122) de la première chambre (44), opposée à la seconde chambre (46), qui communique hydrauliquement avec l'organe (12) de commande.

## Claims

1. Hydraulic braking system (10) for a motor vehicle comprising a brake control member (12), in particular a pedal and a pneumatic servomotor (14) for assisting in the braking of at least one master cylinder (16) linked hydraulically to at least one braking member (20) of the vehicle,
said servomotor comprising a rigid jacket (24) inside which moves at least one transversal partition (26) delimiting in a seal-tight manner a front chamber (28), subject to a first pressure (P₁) and a rear chamber (30), subject to a second pressure (P₂) varying between the first pressure (P₁) and a pressure (Pₐ) greater than the first pressure (P₁), which is attached to a moving tubular pneumatic piston (36) which is mounted to slide and returned elastically backward in the jacket (24) via a return spring (38), said pneumatic piston (36) being capable of stressing an actuating rod (32) of the master cylinder (14),
said control member (12) being capable of controlling a hydraulic/pneumatic pressure regulator (40),
a body (42) of the regulator (40) comprising a first pneumatic chamber (44), comprising, in axial succession, at least one first duct (48) linked to a source of pressure (Pₐ) greater than the first pressure (P₁), a second duct (50) linked to the front chamber (28) and a third duct (52) linked to the rear chamber (30) which are capable of being set to communicate via a three-way valve (54) housed in the first chamber (44), which comprises:
- a feeler (56), moved by the control member (12),
- a first coaxial bushing (58), which moves by sliding, comprising a first coaxial seat (60) interposed between the second and third ducts (50, 52), and a reach (62) which can block the first duct (48),
- a second coaxial bushing (63), interposed radially between the feeler (56) and the first bushing (58), returned elastically towards the feeler (56) and the first seat (60), of which a second seat (64), interposed between the first (48) and third (52) ducts, is capable of cooperating with the feeler (56) to allow or interrupt the communication between said first and third ducts (48, 52), and of which a third seat (66) is capable of cooperating with the first seat (60) to allow or interrupt the communication between the second and third ducts (50, 52),
the first bushing (58) being able to be moved axially by a control means (68) for its reach to free (62) the first duct,
the first bushing (58) being capable, when the feeler (56) has left the second seat (60), of being moved axially by the control means (68) to allow the displacement of the second seat (64) towards the feeler (56) in order to interrupt the communication between the first and third ducts (48, 52),
the body (42) of the regulator (40) comprising a second hydraulic chamber (46), comprising, in axial succession, at least one fourth (70) duct linked to a chamber (72) of the master cylinder (14), and a fifth duct (74) linked to a tank (76) of hydraulic fluid supplying said master cylinder (14), inside which is arranged a moving piston (78), which is arranged between the fourth and fifth ducts (70, 74), which is returned elastically towards the fourth duct (70), which is attached to the first bushing (58) to form the control means (68) slaved to the hydraulic pressure prevailing in the chamber (72) of the master cylinder (14), and which is intended, when the hydraulic fluid pressure prevailing in the chamber (72) of the master cylinder (14) exceeds a determined threshold, to be displaced with the first bushing (58) to selectively free the first duct (48) and/or allow the displacement of the second seat (64) towards the feeler (56) in order to interrupt the communication between the first and third ducts (48, 52),
**characterized in that** the first pneumatic chamber (44) comprises a sixth duct (80) linked to the source of pressure greater than the first pressure, communicating coaxially with the second seat (64), which is intended to allow the supply of the third duct (52) at a pressure greater than the first pressure when the first bushing (58), occupying a position associated with a reduced pressure in the chamber (72) of the master cylinder (14), blocks the first duct (48) via its reach (62).

2. Hydraulic braking system (10) according to the preceding claim, **characterized in that** the sixth duct (80) has a restricted section smaller than the first duct (48) to allow:
- a reduced supply of the rear chamber (30) at the pressure (Pₐ) greater than the first pressure (P₁) via only the sixth duct (80) when the first bushing (58), occupying a position associated with a reduced pressure in the chamber (72) of the master cylinder (16), blocks the first duct (48) via its reach (62),
- a high supply of the rear chamber (30) at the pressure (Pₐ) greater than the first pressure (P₁) simultaneously via the first and sixth ducts (48, 80) when the first bushing (58), occupying a position associated with a high pressure in the chamber (72) of the master cylinder (16), frees the first duct (48) of its reach (62).

3. Hydraulic braking system (10) according to one of the preceding claims, **characterized in that** the pressure regulator comprises a tubular element (82) which comprises:
- a first section, forming the first bushing (58) sliding in the first pneumatic chamber (44), comprising, in axial succession, the peripheral reach (62) capable of blocking the first duct (48) opening radially into the first chamber (44), at least one hole (84) arranged radially at least partially facing the second duct (50) and intended to allow communication between the second duct (50) and the interior of the first section, the first internal seat (60), and at least one opening (86) intended to allow communication between the interior of the first section and the third duct (52),
- a second section, forming the moving piston (78) sliding in the second hydraulic chamber (46), which is returned elastically by a spring (88) bearing on a bottom wall (90) of the second chamber, and which comprises at least one transversal wall (92) interposed between the fourth and fifth ducts (70, 74).

4. Hydraulic braking system (10) according to the preceding claim, **characterized in that** the tubular element (82) receives, by internal sliding, an actuating rod (96) coaxial to the feeler (56), returned elastically toward the moving piston (78), which is intended to allow the stressing of the moving piston (78) directly by the feeler (56) to establish a pressure in the master cylinder (14) in case of failure of the servomotor (16).

5. Hydraulic braking system (10) according to the preceding claim, **characterized in that** the first section comprises two opposing oblong openings (86) which receive, by sliding, two opposing radial arms (98) which are attached to a first end (100) of the actuating rod (96) and which receive, by bearing, an end (102) of a return spring (104), of which the other end (106) bears on a transversal shoulder face (108) of the first chamber (44).

6. Hydraulic braking system (10) according to the preceding claim, **characterized in that** a second end (110) of the rod (96) is guided in a bore of the moving piston (78).

7. Hydraulic braking system (10) according to the preceding claim, **characterized in that** the moving piston (78) is tubular, with a diameter corresponding substantially to the diameter of the second hydraulic chamber (46) and **in that** its bore (94), which comprises the wall (92) interposed between the fourth and fifth ducts (70, 74), communicates with the fourth duct (70) via a radial hole (95), said wall (92) being capable of being stressed directly by the actuating rod (96) in case of failure of the servomotor (16).

8. Hydraulic braking system (10) according to one of the preceding claims, **characterized in that** the feeler (56) is fixed to a first end (112) of a control rod (114) which is mounted to move with play through a hole (116) of the second bushing (63) and of which a second end (118) is capable of being moved by the control member (12).

9. Hydraulic braking system (10) according to the preceding claim, **characterized in that** the sixth duct (80) opens into a part (45) of the first chamber (44) upstream of the first and second bushings (58, 63), the part (45) of the first chamber (44) communicating with the hole (116) of the second bushing (63) to allow the supply of the third duct (52) at a pressure (Pₐ) greater than the first pressure (P₁) through the second bushing (63) .

10. Hydraulic braking system (10) according to one of Claims 8 or 9, **characterized in that** the second end (118) of the control rod (114) is attached to a hydraulic piston (120) which is mounted to slide in a seal-tight manner in a part (122) of the first chamber (44), opposite the second chamber (46), which communicates hydraulically with the control member (12).

## Patentansprüche

1. Hydraulisches Bremssystem (10) für ein Kraftfahrzeug, das ein Bremssteuerorgan (12), insbesondere ein Pedal, und einen pneumatischen Servomotor (14) zur Bremskraftverstärkung mindestens eines Hauptzylinders (16) aufweist, der hydraulisch mit mindestens einem Bremsorgan (20) des Fahrzeugs verbunden ist,
wobei der Servomotor eine starre Hülle (24) aufweist, in deren Innerem mindestens eine Quertrennwand (26) beweglich ist, die eine vordere Kammer (28), die einem ersten Druck (P₁) ausgesetzt ist, und eine hintere Kammer (30) begrenzt, die einem zweiten Druck (P₂) ausgesetzt ist, der zwischen dem ersten Druck (P₁) und einem höheren Druck (Pₐ) als der erste Druck (P₁) variiert, die fest mit einem rohrförmigen beweglichen pneumatischen Kolben (36) verbunden ist, der gleitend montiert ist und elastisch in der Hülle (24) mittels einer Rückstellfeder (38) nach hinten zurückgeholt wird, wobei der pneumatische Kolben (36) eine Betätigungsstange (32) des Hauptzylinders (14) beaufschlagen kann,
wobei das Steuerorgan (12) einen hydraulisch/pneumatischen Druckregler (40) steuern kann,
wobei ein Körper (42) des Reglers (40) eine erste pneumatische Kammer (44) aufweist, die nacheinander axial mindestens einen ersten Kanal (48), der mit einer Quelle eines Drucks (Pₐ) höher als der erste Druck (P₁) verbunden ist, einen zweiten Kanal (50), der mit der vorderen Kammer (28) verbunden ist, und einen dritten Kanal (52) aufweist, der mit der hinteren Kammer (30) verbunden ist, die von einem Dreiwegeventil (54) miteinander verbunden werden können, das in der ersten Kammer (44) untergebracht ist, die Folgendes aufweist:
- einen Taster (56), der vom Steuerorgan (12) bewegt wird,
- eine erste gleitbewegliche koaxiale Hülse (58), die einen ersten koaxialen Sitz (60) aufweist, der zwischen den zweiten und den dritten Kanal (50, 52) eingefügt ist, und ein Auflager (62), das den ersten Kanal (48) verschließen kann,
- eine zweite koaxiale Hülse (63), die radial zwischen den Taster (56) und die erste Hülse (58) eingefügt ist, elastisch zum Taster (56) und zum ersten Sitz (60) zurückgeholt wird, von der ein zweiter Sitz (64), der zwischen den ersten (48) und den dritten (52) Kanal eingefügt ist, mit dem Taster (56) zusammenwirken kann, um die Verbindung zwischen dem ersten und dem dritten Kanal (48, 52) zu erlauben oder zu unterbrechen, und von der ein dritter Sitz (66) mit dem ersten Sitz (60) zusammenwirken kann, um die Verbindung zwischen dem zweiten und dem dritten Kanal (50, 52) zu erlauben oder zu unterbrechen,
wobei die erste Hülse (58) axial von einer Steuereinrichtung (68) bewegt werden kann, damit ihr Auflager (62) den ersten Kanal freigibt,
wobei die erste Hülse (58) dann, wenn der Taster (56) den zweiten Sitz (60) verlassen hat, axial von der Steuereinrichtung (68) bewegt werden kann, um die Verschiebung des zweiten Sitzes (64) zum Taster (56) zu erlauben, um die Verbindung zwischen dem ersten und dem dritten Kanal (48, 52) zu unterbrechen,
wobei der Körper (42) des Reglers (40) eine zweite hydraulische Kammer (46) aufweist, die nacheinander axial mindestens einen vierten Kanal (70), der mit einer Kammer (72) des Hauptzylinders (14) verbunden ist, und einen fünften Kanal (74) aufweist, der mit einem Behälter (76) hydraulischer Versorgungsflüssigkeit des Hauptzylinders (14) verbunden ist, in deren Innerem ein beweglicher Kolben (78) angeordnet ist, der zwischen dem vierten und dem fünften Kanal (70, 74) angeordnet ist, der elastisch zum vierten Kanal (70) zurückgeholt wird, der fest mit der ersten Hülse (58) verbunden ist, um die Steuereinrichtung (68) zu bilden, die auf den Hydraulikdruck geregelt ist, der in der Kammer (72) des Hauptzylinders (14) herrscht, und die dazu bestimmt ist, wenn der in der Kammer (72) des Hauptzylinders (14) herrschende Hydraulikdruck eine bestimmte Schwelle überschreitet, sich mit der ersten Hülse (58) zu verschieben, um selektiv den ersten Kanal (48) freizugeben und/oder die Verschiebung des zweiten Sitzes (64) zum Taster (56) zu erlauben, um die Verbindung zwischen dem ersten und dem dritten Kanal (48, 52) zu unterbrechen,
**dadurch gekennzeichnet, dass** die erste pneumatische Kammer (44) einen sechsten Kanal (80) aufweist, der mit der Quelle eines Drucks verbunden ist, der höher ist als der erste Druck, koaxial mit dem zweiten Sitz (64) verbunden ist, der dazu bestimmt ist, die Versorgung des dritten Kanals (52) auf einem Druck höher als der erste Druck zu erlauben, wenn die erste Hülse (58), die eine Stellung einnimmt, die einem verringerten Druck in der Kammer (72) des Hauptzylinders (14) zugeordnet ist, den ersten Kanal (48) mittels ihres Auflagers (62) verschließt.

2. Hydraulisches Bremssystem (10) nach dem vorhergehenden Anspruch, **dadurch gekennzeichnet, dass** der sechste Kanal (80) einen verringerten Querschnitt geringer als der erste Kanal (48) hat, um Folgendes zu erlauben:
- eine verringerte Versorgung der hinteren Kammer (30) auf dem Druck (Pₐ) höher als der erste Druck (P₁) nur durch den sechsten Kanal (80), wenn die erste Hülse (58), die eine einem verringerten Druck in der Kammer (72) des Hauptzylinders (16) zugeordnete Stellung einnimmt, den ersten Kanal (48) mittels ihres Auflagers (62) verschließt,
- eine hohe Versorgung der hinteren Kammer (30) auf dem Druck (Pₐ) höher als der erste Druck (P₁) gleichzeitig vom ersten und vom sechsten Kanal (48, 80), wenn die erste Hülse (58), die eine einem hohen Druck in der Kammer (72) des Hauptzylinders (16) zugeordnete Stellung einnimmt, den ersten Kanal (48) von ihrem Auflager (62) befreit.

3. Hydraulisches Bremssystem (10) nach einem der vorhergehenden Ansprüche, **dadurch gekennzeichnet, dass** der Druckregler ein rohrförmiges Element (82) aufweist, das Folgendes aufweist:
- einen ersten Abschnitt, der die erste Hülse (58) formt, die in der ersten pneumatischen Kammer (44) gleitet, der axial nacheinander das Umfangsauflager (62), das den ersten Kanal (48) verschließen kann, der radial in die erste Kammer (44) mündet, mindestens eine Bohrung (84), die radial mindestens teilweise vor dem zweiten Kanal (50) angeordnet und dazu bestimmt ist, die Verbindung zwischen dem zweiten Kanal (50) und dem Inneren des ersten Abschnitts zu erlauben, den ersten inneren Sitz (60) und mindestens eine Öffnung (86) aufweist, die dazu bestimmt ist, die Verbindung zwischen dem Inneren des ersten Abschnitts und dem dritten Kanal (52) zu erlauben,
- einen zweiten Abschnitt, der den beweglichen Kolben (78) bildet, der in der zweiten hydraulischen Kammer (46) gleitet, der elastisch von einer Feder (88) zurückgestellt wird, die auf einer Rückwand (90) der zweiten Kammer aufliegt, und der mindestens eine Querwand (92) aufweist, die zwischen den vierten und den fünften Kanal (70, 74) eingefügt ist.

4. Hydraulisches Bremssystem (10) nach dem vorhergehenden Anspruch, **dadurch gekennzeichnet, dass** das rohrförmige Element (82) innen gleitend eine Betätigungsstange (96) koaxial zum Taster (56) aufnimmt, die elastisch zum beweglichen Kolben (78) zurückgestellt wird, die dazu bestimmt ist, die Beaufschlagung des beweglichen Kolbens (78) direkt vom Taster (56) zu erlauben, um einen Druck im Hauptzylinder (14) im Fall einer Störung des Servomotors (16) aufzubauen.

5. Hydraulisches Bremssystem (10) nach dem vorhergehenden Anspruch, **dadurch gekennzeichnet, dass** der erste Abschnitt zwei gegenüberliegende längliche Öffnungen (86) aufweist, die gleitend zwei gegenüberliegende radiale Arme (98) aufnehmen, die mit einem ersten Ende (100) der Betätigungsstange (96) verbunden sind und die in Auflage ein Ende (102) einer Rückstellfeder (104) aufnehmen, deren anderes Ende (106) auf einer Schulterquerseite (108) der ersten Kammer (44) aufliegt.

6. Hydraulisches Bremssystem (10) nach dem vorhergehenden Anspruch, **dadurch gekennzeichnet, dass** ein zweites Ende (110) der Stange (96) in einer Bohrung des beweglichen Kolbens (78) geführt wird.

7. Hydraulisches Bremssystem (10) nach dem vorhergehenden Anspruch, **dadurch gekennzeichnet, dass** der bewegliche Kolben (78) rohrförmig ist, mit einem Durchmesser, der im Wesentlichen dem Durchmesser der zweiten hydraulischen Kammer (46) entspricht, und dass seine Bohrung (94), die die Wand (92) aufweist, die zwischen dem vierten und dem fünften Kanal (70, 74) eingefügt ist, mit dem vierten Kanal (70) mittels einer radialen Bohrung (95) in Verbindung steht, wobei die Wand (92) im Fall einer Störung des Servomotors (16) direkt von der Betätigungsstange (96) beaufschlagt werden kann.

8. Hydraulisches Bremssystem (10) nach einem der vorhergehenden Ansprüche, **dadurch gekennzeichnet, dass** der Taster (56) an einem ersten Ende (112) einer Steuerstange (114) befestigt ist, die mit Spiel beweglich durch eine Bohrung (116) der zweiten Hülse (63) montiert ist, und deren zweites Ende (118) vom Steuerorgan (12) bewegt werden kann.

9. Hydraulisches Bremssystem (10) nach dem vorhergehenden Anspruch, **dadurch gekennzeichnet, dass** der sechste Kanal (80) in einen Teil (45) der ersten Kammer (44) vor den ersten und zweiten Hülsen (58, 63) mündet, wobei der Teil (45) der ersten Kammer (44) mit der Bohrung (116) der zweiten Hülse (63) verbunden ist, um die Versorgung des dritten Kanals (52) mit einem Druck (Pₐ) höher als der erste Druck (P₁) durch die zweite Hülse (63) zu erlauben.

10. Hydraulisches Bremssystem (10) nach einem der Ansprüche 8 oder 9, **dadurch gekennzeichnet, dass** das zweite Ende (118) der Steuerstange (114) fest mit einem Hydraulikkolben (120) verbunden ist, der dicht in einem Teil (122) der ersten Kammer (44) entgegengesetzt zur zweiten Kammer (46) gleitend angeordnet ist, der hydraulisch mit dem Steuerorgan (12) verbunden ist.
